# EUROPEAN PATENT SPECIFICATION

(11) **EP 2 601 804 B1**
(45) Date of publication and mention of the grant of the patent: **15.11.2017**
(21) Application number: 10742812.0
(22) Date of filing: 06.08.2010
(51) Int. Cl.: H04W 36/00

(54) **METHOD FOR SELF-OPTIMIZED INTERWORKING BETWEEN RADIO ACCESS NETWORKS**
VERFAHREN FÜR SELBSTOPTIMIERTE ZUSAMMENARBEIT ZWISCHEN FUNKZUGANGSNETZEN
PROCÉDÉ POUR UN INTERFONCTIONNEMENT AUTO-OPTIMISÉ ENTRE DES RÉSEAUX D'ACCÈS RADIO

(43) Date of publication of application: 12.06.2013
(73) Proprietor: Nokia Solutions and Networks Oy, 02610 Espoo (FI)
(72) Inventor: ROSE, Dirk, 80336 Munich (DE); WEGMANN, Bernhard, 83607 Holzkirchen (DE); VIERING, Ingo, 81541 München (DE); LOBINGER, Andreas, 83714 Miesbach (DE); SARTORI, Cinzia Gesuina Elena, 80634 Munchen (DE); MICHEL, Juergen, 80687 München (DE)
(74) Representative: Borgström, Markus
(86) International application number: PCT/EP2010/061478
(87) International publication number: WO 2012/016598

(56) References cited:
- EP-A1- 2 205 023
- WO-A1-2004/004393
- WO-A1-2009/002909
- WO-A1-2010/058374
- WO-A2-2008/087535
- WO-A2-2009/045070
- "LTE; Evolved Universal Terrestrial Radio Access (E-UTRA) and Evolved Universal Terrestrial Radio Access Network (E-UTRAN); Overall description; Stage 2 (3GPP TS 36.300 version 9.4.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V9.4.0, 1 July 2010 (2010-07-01), XP014047460,
- ANDRÃ CR SCHRÃDER ET AL: "Distributed Self-Optimization of Handover for the Long Term Evolution", 10 December 2008 (2008-12-10), SELF-ORGANIZING SYSTEMS, SPRINGER BERLIN HEIDELBERG, BERLIN, HEIDELBERG, PAGE(S) 281 - 286, XP019113422, ISBN: 978-3-540-92156-1 page 1, paragraph 1 - page 2, paragraph 2

## Description

### Field of invention

The present invention relates to the field of self-optimizing networks and interworking between radio access networks. In particular, the present invention relates to a method for self-optimized interworking between a first radio access network of a first type of radio access technology and a second radio access network of a second type of radio access technology. Further, the present invention relates to a base station and a system comprising a user equipment and the base station, which are adapted for performing the above mentioned method.

### Art Background

"LTE; Evolved Universal Terrestrial Radio Access (E-UTRA) and Evolved Universal Terrestrial Radio Access Network (E-UTRAN); Overall description; Stage 2 (3GPP TS 36.300 version 9.4.0 Release 9", 1 July 2010; is a technical standard document providing an overview and an overall description of the E-UTRAN radio interface protocol architecture.

WO 2009/002909 relates to wireless communications and in particular to performing inter-radio access technology (RAT) measurements. Accordingly, it discloses receiving a long term evolution (LTE) measurement quantity, a measurement gap, measuring for available GSM cells and reporting the measurement results.

EP 2205023 relates to cellular wireless communications and in particular to automatically configuring a neighbour cell list for a base station in a cellular wireless communications network. Accordingly, it discloses receiving measurement reports for neighbour cells from a plurality of mobile stations, grouping the reports by the neighbour cell that each is associated with, selecting neighbour cells for inclusion into the list depending on the number of reports in their respective groups.

WO 2009/045070 relates to inter-radio access technology (RAT) and in particular to supporting mobility of a mobile station between an E-UTRAN network and another RAT cell. Accordingly, it discloses receiving cell reselection information and neighbour cell information from a base station and based on this information determining if necessary the quality of another RAT cell and then reselecting a cell based or not.

In mobile radio communications, a parallel operation of radio access networks (RAN) of different types of radio access technology (RAT) like LTE (Long Term Evolution), 2G (GSM/GPRS) and 3G (UMTS/HSPA) networks may be needed. For reasons of seamless service availability cell-reselection and different types of inter RAT handover triggers may be deployed as for example coverage, interference, service-based, load-based, pre-emption.

The following scenarios may occur:
- Mainly LTE but also 3G coverage may be rather limited and form islands whereas 2G coverage is typically globally provided. That means that handover / cell reselection ensures service continuity.
- Load balancing between 2G, 3G and LTE can exploit high trunking gains. In an overloaded cell, a handover to 3G/2G neighbor cells for both, circuit switched (CS) and packet switched (PS) like services, may be envisaged. In this way a significant capacity increase can be achieved.
- Due to QoS constraints, essential services as voice and video calls may be not available in the initial phases of LTE deployment. If hand-held user equipments may become available, such a scenario needs to be associated with service triggered handovers. This may become obvious if emergency calls are considered. A tight inter-working of different RAT (e.g. 2G/3G/LTE) can have the advantage to provide all the needed service types and increase the user perception.

In case of Inter-RAT, before a handover can be triggered, inter-RAT measurements have to be triggered leading to a delay for the handover. This is for example a disadvantage during call-setup and in emergency situations (e.g. sudden drops in level, quality).

There may be a need for providing a method for interworking between different radio access networks, which can be performed without delay.

### Summary of the Invention

This need may be met by the subject matter according to the independent claims. Advantageous embodiments of the present invention are described by the dependent claims.

According to a first aspect of the invention there is provided a method for self-optimized interworking between a first radio access network of a first type of radio access technology and a second radio access network of a second type of radio access technology, wherein the first radio access network comprises a first base station and the second radio access network comprises a second base station. The method comprises measuring by a user equipment, which is served by the first base station, signals indicative for availability characteristics of the second base station, transmitting the signals indicative for the availability characteristics of the second base station from the user equipment to the first base station, generating a map of the coverage of the first radio access network and the second radio access network based on the signals indicative for the availability characteristics of the first base station and the second base station, wherein the map comprises the information about the availability characteristics of the first base station and the second base station for interworking, and self-optimized interworking between the first base station and the second base station based on the map of coverage.

This aspect of the invention is based on the idea that a parallel operation of radio access networks (RAN) of different types of radio access technology (RAT) may be operated in parallel. For example, LTE networks may be used in parallel with 2G (GSM/GPRS) and 3G (UMTS/HSPA) networks. The method is targeting on SON (self optimizing networks) and in particular service and/or load balancing driven mobility between different RATs. An additional application may be Energy Saving (ES). In ES state the LTE eNB/cell can be switched off during times of low traffic demand. This requires however the knowledge of another cell (either another LTE or in the inter-RAT ES case a GSM or UMTS cell) is covering the considered geographical area. In this case the knowledge also could be established using the described method.

The complex layout and a large number of sites may require sophisticated planning and optimization algorithms. Operational expenditure (OPEX) reductions may be addressed by self-optimizing strategies. A tight interworking of LTE, 3G and 2G networks may be highly beneficial. For reasons of seamless service availability, cell-reselection and different types of inter RAT handover triggers may be deployed as for example coverage, interference, service-based, load-based, pre-emption.

The parallel deployment of different RAT may offer an opportunity for inter-working, which may be applied to different use cases. A handover from for example LTE towards 3G/2G may be triggered, if a terminal or user equipment is simultaneously attached to both LTE and 2G/3G CS radio networks or if a terminal connects to LTE but is steered towards the 2G/3G CS network when a voice call is required. Reason can be for example a CS-fallback handover. Also load considerations could be done as 2G/3G should be able to maintain the call without any quality of service (QoS) degradation. Further triggers could be coverage (border cell or coverage holes), load balancing etc.

In GSM the directed retry procedure is used to establish a call if the centre cell is overloaded. Directed retry in this case may define the process where a given cell reroutes its call-processing attempts to an adjacent cell or to other nearby cells. This however has limited effects in UMTS and LTE with tight frequency reuse, because a call being established in a neighbor cell would always also increase the interference of the centre cell. What is possible though is to establish a call in UMTS or GSM if LTE is overloaded. Even more important, in case LTE is not able to provide the requested service type at all, the call can be transferred to the legacy system (GSM or UMTS).

For both examples and further cases as for example emergency HOs due to level, quality and also pre-emption, a directed retry would speed up the procedure. In case of Inter-RAT handover, there is the problem of delaying the procedure by triggering inter-RAT measurements before the handover can be triggered and is a clear disadvantage during call-setup and in emergency situations (e.g. sudden drops in level, quality).

The availability of the other RAT is may be ensured -from inter RAT measurement perspective- in either of the following ways:
- Inter-RAT measurements of the user equipment (UE), that means an eNB (eNodeB or base station) will command the UE to measure the CPICH (3G) or the BCCH carrier frequency (2G) in order to establish knowledge of the other RATs level and/or quality. Only in case of sufficient good coverage the HO event reporting will be triggered. During this method, a delay may occur, which is introduced by such measurements. Particularly in the CS fall-back approach the call setup duration may be unacceptably increased. Furthermore in the most cases measurement gaps need to be provided (as almost 100% of the terminals are not equipped with two HF parts) which may lead to degraded throughput. Additionally the higher power consumption results in reduced battery time.
- Enabling so-called blind handover may avoid measurements. However to ensure the other RATs availability, this is based on network planning results. Drive tests can be carried out to support the outcome and to increase the reliability of this approach. The latter may require high efforts and may therefore be highly expensive and time-consuming. The reliability may be limited though as only snapshots can be analyzed (limited in area and time). Changing conditions (load, tilt etc) would require new status analysis. An enlarged drop risk may be the result of the utilization of the blind handover in connection with limited coverage knowledge/verification.
- Alternatively a so called directed retry performed as "blind handover" may be ordered by the eNB.

Blind handover does not measure target cell link level or quality before handover. Typically the target cell is derived from OAM (operation, administration and maintenance) data and a handover command is sent to the UE. So in fact the directed retry in LTE may be a blind handover to UMTS or GSM without measurements and during call setup.

Due to heterogeneous network layout, differences in frequency, certain antenna configurations and environmental dependencies, the coverage probabilities of GSM, UMTS and LTE cells cannot be directly linked nor easily predicted. Theoretical models/planning tools are not sufficient to describe real scenarios in detail. These constraints have to be considered if the blind handover feature should be deployed. The verification of a near 100% coverage of a neighbor is difficult and practical attempts to solve the problem by for example drive tests are time-consuming and therefore costly. On the other hand, coverage problems may lead to well-known problems as call drops, call setup failures, handover failures and other sources of service degradation. Therefore an a priori definition may lead to severe risks of QoS degradation.

Therefore, the present method may refer to the purpose to minimize the delay given by the foregoing Inter-RAT measurement phase or even get completely rid of it while the availability of the other RAT can be ensured. Also, maintaining of QoS in terms of speech quality / FER, throughput as well as keeping HO failure (HOF), radio link failure (RLF) and call drop (CDR) rate within the desired target range may be provided.

In the present method, an automated, self-organizing inter-RAT coverage verification is provided based on regular measurement campaigns. Based on this data, an inter-RAT availability status may be derived. In this way knowledge about the coverage probability of inter-RAT neighbors can be acquired. Configuration of (periodic) measurements of 2G/3G coverage yields (periodic) measurement reports. If a sufficient number of such reports has been evaluated and a sufficient percentage of these reports show sufficient coverage in terms of level and/or quality, the considered 2G/3G neighbor may be considered valid as target cell for directed retry. Such required minimum level/quality thresholds are normally defined by the operator, e.g. in the order of: for UMTS: Ec/No > -18 dB, RSCP > -95 dBm and for GSM: RXLEV > -85 dm.

The measurements may be event triggered intra and inter RAT measurements. In order to achieve sufficient reliability a limitation of the number of neighbor cells measured in parallel may be ensured (for example based on a pre-selection by OAM). This may also be used for energy savings. If a cell knows that it is fully covered by another cell, it can not only initiate reliable blind handovers, it can also initiate a switch off without the risk of creating a coverage hole.

The term "radio access network", RAN, may denote a part of a mobile telecommunication system. It may implement a radio access technology. Conceptually, it sits between the mobile phone or user equipment and the core network (CN). Examples of radio access network types are GRAN (GSM radio access network), GERAN (essentially the same as GRAN but specifying the inclusion of EDGE packet radio services) and UTRAN (UMTS radio access network). The first type of radio access technology and the second type of radio access technology may relate to different types of radio access technologies.

The term "interworking" in the method may denote in particular a measurement-free interworking. This interworking, or blind interworking may be performed without performing measurements in response to a trigger. The measurements may be performed before for generating a coverage map.

In the following there will be described exemplary embodiments of the present invention.

According to an embodiment of the invention, the self-optimized interworking comprises handing over of the user equipment from the first base station to the second base station.

The term "interworking" may denote for example a handover operation of a user equipment from the first base station to the second base station. It may also refer to other ways of interworking. The handover may be performed in a known way.

According to a further embodiment of the invention, the availability characteristics comprise information about the cell link quality and/or cell link level of a link between the user equipment and the first base station or the second base station.

The link between a user equipment and a base station may be characterized by quality or level. Link quality may refer to the grade of the link, wherein level may refer to the strength of the signal on the link.

According to a further embodiment of the invention, generating the map of coverage comprises statistically evaluating the signals indicative for the availability characteristics of the base stations.

The information, which may be achieved by measuring the signals indicative for the availability characteristics of the base stations, may be evaluated and rated based on known statistical measurements.

According to a further embodiment of the invention, the map of coverage comprises a blind handover flag for each base station, wherein the blind handover flag is indicative for the availability of the first base station and the second base station.

If a sufficient number of such reports has been evaluated and an appropriate number of these reports show sufficient coverage in terms of level and/or quality the considered 2G/3G neighbor (for example the second base station) may be considered valid as target cell for directed retry (blind handover flag set). An additional filtering (sliding window or low pass) could be applied to these measurements. These results are used to add a blind HO flag to each inter-RAT neighbor: Target for blind HO = true/false.

According to a further embodiment of the invention, the value of the blind handover flag for the first base station is set true if the first base station is available for blind handover and/or wherein the value of the blind handover flag for the second base station is set true if the second base station is available for blind handover.

The blind handover flag may also be set false, if the first base station or the second base station is not available for blind handover.

According to a further embodiment of the invention, the method further comprises changing the value of the blind handover flag by the base stations based on a further information.

User equipment measurements of the other RAT may be combined with status updates received from the other RAT's control node. Thus, the value may be changed from true to false or vice versa based on changes of the availability of the base stations.

According to a further embodiment of the invention, the further information comprises information obtained by an evaluation of key performance indicators.

Different key performance indicators (KPIs) may be used as an additional factor for generating and actualizing the map of coverage. KPIs may be for example "Percentage of unsuccessful inter-RAT HO with loss of connection" or "Percentage of unsuccessful HO with return to old RAT.

According to a further embodiment of the invention, the further information comprises information obtained by an exchange of cell status information between the first base station and the second base station.

As an additional improvement of the map of coverage, the first base station and the second base station may exchange information about for example actual load, tilt or cell non-availability. This information may be used for changing the value of the blind handover flag, i.e. for disabling or verifying the status of the flag.

According to a second aspect of the invention, a user equipment for self-optimized interworking between a first radio access network of a first type of radio access technology and a second radio access network of a second type of radio access technology is provided, wherein the first radio access network comprises a first base station and the second radio access network comprises a second base station, wherein the user equipment is served by the first base station. The user equipment comprises a measuring unit for measuring signals indicative for availability characteristics of the second base station and a transmitting unit for transmitting the signals indicative for the availability characteristics of the second base station to the first base station, wherein the base station is adapted for generating a map of the coverage of the first radio access network and the second radio access network based on the signals indicative for the availability characteristics of the first base station and the second base station, wherein the map comprises the information about the availability characteristics of the first base station and the second base station for interworking, and wherein self-optimized interworking between the first base station and the second base station is carried out based on the map of coverage.

The user equipment (UE) may be any type of communication end device, which is capable of connecting with the described base station. The UE may be in particular a cellular mobile phone, a Personal Digital Assistant (PDA), a notebook computer, a printer and/or any other movable communication device.

The user equipment may comprise a receiver which is adapted for receiving signals from the first base station and the second base station. The measuring unit of the user equipment may be implemented for example as part of a control unit, like a CPU or a microcontroller. Based on signals received by the receiver, the measuring unit may measure signals indicative for availability characteristics of the second base station and determine the availability characteristics. This may mean that an evaluation of signal properties like quality or level may be performed by the measuring unit. The measuring unit and the receiver may be coupled or may be implemented as one single unit.

The transmitting unit may be a transmitter as known by a skilled person. The receiver and the transmitting unit may be implemented as one single unit, for example as a transceiver. The transceiver or the receiver and the transmitting unit may be adapted to communicate with the first base station and the second base station via an antenna.

According to a further aspect of the invention, a first base station for self-optimized interworking between a first radio access network of a first type of radio access technology and a second radio access network of a second type of radio access technology is provided, wherein the first radio access network comprises the first base station and the second radio access network comprises a second base station. The first base station comprises a receiving unit for receiving from a user equipment, which is served by the first base station, signals, which are measured by the user equipment and are indicative for availability characteristics of the second base station, a generation unit for generating a map of the coverage of the first radio access network and the second radio access network based on the signals indicative for the availability characteristics of the first base station and the second base station, wherein the map comprises the information about the availability characteristics of the first base station and the second base station for interworking, and an interworking unit for self-optimized interworking between the first base station and the second base station based on the map of coverage.

The base station may be any type of access point or point of attachment, which is capable of providing a wireless access to a telecommunication network. Thereby, the wireless access may be provided for a user equipment or for any other network element, which is capable of communicating in a wireless manner.

The receiving unit may be a receiver as known by a skilled person. The base station may also comprise a transmitter. The receiver and the transmitter may be implemented as one single unit, for example as a transceiver. The transceiver or the receiving unit and the transmitter may be adapted to communicate with the second base station or the user equipment via an antenna.

The receiving unit may receive from the user equipment signals indicative of availability characteristics of the second base station. The generation unit, which may be implemented for example as part of a control unit, like a CPU or a microcontroller, may receives the signals from the receiving unit and may then generate the map of coverage based on these signals.

The interworking unit, which may also be implemented for example as part of a control unit, like a CPU or a microcontroller and/or which may be implemented as a single unit together with the generation unit, may be adapted for self-optimized interworking between the first base station and the second base station. The interworking unit may be adapted for controlling the receiving unit and/or the transmitter to communicate with the second base station and/or the user equipment, for example for initiating a handover of the user equipment or for exchanging messages between the first base station and the second base station.

According to a further aspect of the invention, a system for self-optimized interworking between a first radio access network of a first type of radio access technology and a second radio access network of a second type of radio access technology is provided. The system comprises the user equipment and the first base station having the above mentioned features.

According to a further aspect of the invention, a computer program (for instance a software routine, in source code or in executable code) is provided, which, when being executed by a processor, is adapted to control or carry out a method having the above mentioned features.

According to yet another aspect of the invention, a computer-readable medium (for instance a CD, a DVD, a USB stick, a floppy disk or a hard disk) is provided, in which a computer program is stored which, when being executed by a processor, is adapted to control or carry out a method having the above mentioned features.

Self-optimized interworking between radio access networks which may be performed according to aspects of the invention can be realized by a computer program, that is by software, or by using one or more special electronic optimization circuits, that is in hardware, or in hybrid form, that is by means of software components and hardware components.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a system according to an embodiment of the invention.
Figure 2 shows a system according to a further embodiment of the invention.
Figure 3 shows a system for a fallback scenario.
Figure 4 shows an example for a handover situation.
Figure 5 shows a diagram illustrating a handover situation.
Figure 6 shows a transactional flow diagram for an evaluation of a blind handover availability.
Figure 7 shows an example of a coverage map for radio access networks.

### Detailed Description

It is noted that in different figures, similar or identical elements are provided with reference signs, which are different from the corresponding reference signs only within the first digit.

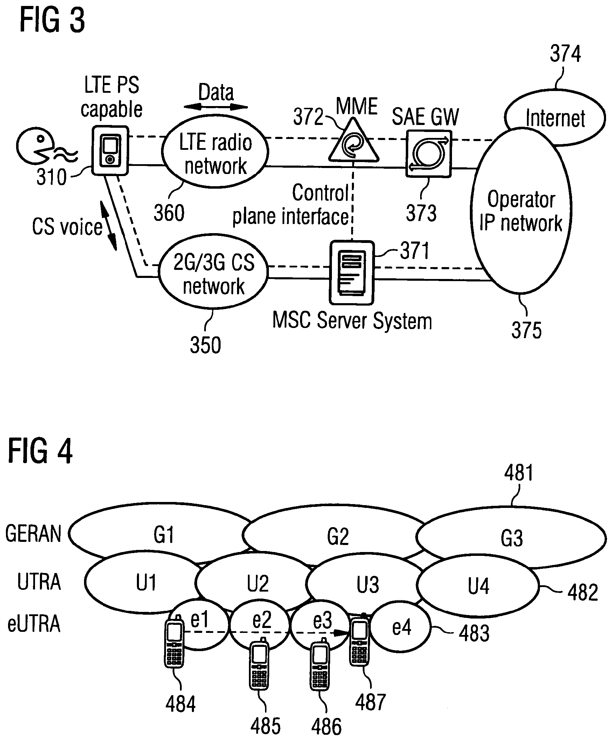

In the following, different scenarios of mobile radio communications with focus on parallel operation of LTE with 2G (GSM/GPRS) and 3G (UMTS/HSPA) networks are shown. A parallel operation of different types of RATs may be used in the following cases:
- Mainly LTE but also 3G coverage may be rather limited and form islands whereas 2G coverage is typically globally provided. That means handover / cell reselection ensures service continuity.
- Load balancing between 2G, 3G and LTE can exploit high trunking gains. In an overloaded cell a handover to 3G/2G neighbor cells for both, CS and PS like services may be envisaged. In this way a significant capacity increase can be achieved.
- Due to QoS constraints essential services as voice and video calls may be not available in the initial phases of LTE deployment. As hand-held UEs may become available such a scenario needs to be associated with service triggered handovers. This becomes absolutely obvious if emergency calls are considered. A tight interworking of different RAT (e.g. 2G/3G/LTE) as illustrated in Fig. 3 can has the advantage to provide all the needed service types and increase the user perception.

In Fig. 3, it is shown that a UE 310 is used in a data transmitting operation in an LTE network 360. Via a mobility management entity MME 372 and a SAE gateway 373, the UE may be connected to an operator IP network 375 and internet services 374. The MME 372 is communicating via a control plane interface with a MSC server system 371 of a 2G/3G carrier select network 350. In the case of a requested phone call or voice call, the UE may switch from the LTE network to the 2G/3G network as a fallback.

The parallel deployment of different RAT offers opportunity for inter-working which may be applied to different use cases. Fig 4 shows possible trigger for handover from LTE towards 3G/2G.
- Terminal is simultaneously attached to both LTE (483) and 2G/3G CS (481, 482) radio networks
- Terminal connects to LTE but is steered towards the 2G/3G CS network when a voice call is required. Reason can be fallback HO, also load considerations could be done as 2G/3G shall be able to maintain the call w/o any QoS degradation.
- Further triggers could be coverage (border cell (UE 484) or coverage holes (UE 487)), load balancing (UE 486) etc.

In GSM the directed retry procedure is used to establish a call if the centre cell is overloaded. This however has limited effects in UMTS and LTE with tight reuse, because a call being established in a neighbor cell would always also increase the interference of the centre cell. What is possible though is to establish a call in UMTS or GSM if LTE is overloaded.

For both examples and further cases as e.g. emergency HOs due to level, quality and also pre-emption a directed retry would speed up the procedure. In case of Inter-RAT there is the problem of delaying the procedure by triggering inter-RAT measurements before HO can be triggered and is a clear disadvantage during call-setup and in emergency situations (e.g. sudden drops in level, quality).

The problem to be solved is basically to minimize this delay given by the foregoing Inter-RAT measurement phase or even get completely rid of it while the availability of the other RAT can be ensured. This aims to maintain QoS in terms of speech quality / FER, throughput as well as to keep HO failure (HOF), radio link failure (RLF), call drop (CDR) rate within the desired target range.

The availability of the other RAT may be ensured -from inter RAT measurement perspective- in either of the following ways:
- Inter-RAT measurements of the UE. That means an eNB will command the UE to measure the CPICH (3G) or the BCCH carrier frequency (2G) in order to establish knowledge of the other RATs level and/or quality. Only in case of sufficient good coverage the HO event reporting will be triggered. A main disadvantage of this method is the delay, which is introduced by such measurements. Particularly in the CS fall-back approach the call setup duration is unacceptably increased. Furthermore in the most cases measurement gaps need to be provided (as almost 100% of the terminals are not equipped with two HF parts) which may lead to degraded throughput. Additionally the higher power consumption results in reduced battery time.
- Enabling so-called blind HO avoids measurements. However to ensure the other RATs availability is based on network planning results. Drive tests can be carried out to support the outcome and to increase the reliability of this approach. The latter requires high efforts and is therefore highly expensive and time-consuming. The reliability is limited though as only snapshots can be analyzed (limited in area and time). Changing conditions (load, tilt etc) would require new status analysis. An enlarged drop risk may be the result of the utilization of the blind handover in connection with limited coverage knowledge/verification.

Alternatively a so called directed retry performed as "blind handover" may be ordered by the eNB.

Blind handover does not measure target cell link level or quality before handover. Typically the target cell is derived from OAM data and a handover command is sent to the UE. So in fact the directed retry in LTE is a blind handover to UMTS or GSM without measurements and during call setup.

Due to heterogeneous network layout, differences in frequency, certain antenna configurations and environmental dependencies the coverage probabilities of GSM, UMTS and LTE cells cannot be directly linked nor easily predicted. Theoretical models/planning tools are not sufficient to describe real scenarios in detail.

These constraints have to be considered if the blind handover feature shall be deployed. The verification of a near 100% coverage of a neighbor is difficult and practical attempts to solve the problem by e.g. drive tests are time-consuming and therefore costly. On the other hand coverage problems may lead to well-known problems as call drops, call setup failures, handover failures and other sources of service degradation. Therefore an a priori definition leads to severe risks of QoS degradation.

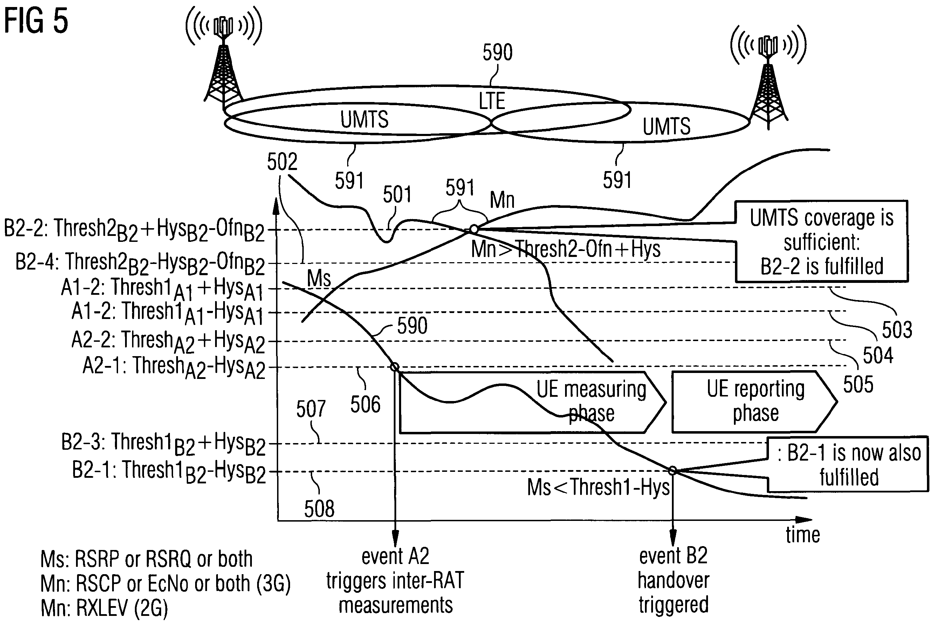

In Fig. 5, a handover from an LTE network to a 3G network with inter RAT measurements may be seen. The graphs 591 show the coverage of an 2G or 3G network, wherein the graph 590 show the coverage of an LTE network. Based on different thresholds (501, 502, 503, 503, 504, 505, 506, 507 and 508), a handover is triggered. By the triggering event A2, inter RAT measurements are started. In the case of the event B2, the handover is triggered.

A typical implementation of the HO evaluation may be as follows. Event A2 ("Serving becomes worse than threshold") is used to trigger a measurement report from the UE. At down-crossing A2-1 (entering condition) the first report is sent. Optionally further events may be sent until an upcrossing of A2-2 (leaving condition) takes place. At reception of such report the eNB is informed and can configure the UE to perform e.g. inter-RAT measurements. Event A1 ("Serving becomes better than threshold") with the thresholds A1-1 (entering condition) and A1-2 (leaving condition) may be used to deactivate such measurements as the serving cells signal has recovererd. Alternatively, if the serving cells signal level and/or quality does deteriorate further the UE detects that the serving signals measurement quantity is below B2-1 (entering condition 1) and the inter-RAT neighbor cells signal is above B2-2 (entering condition 2) the UE sends the appropriate measurement report. In other words event B2 ("serving becomes worse than threshold 1 and inter RAT neighbour becomes better than threshold 2") has been fulfilled and typically a HO to the inter RAT neighbour is attempted. B2-3 and B2-4 (leaving condition 1 and 2 resp.) are used to deactivate the event again (logical "or", i.e. leaving 1 or 2 is sufficient to leave the event).

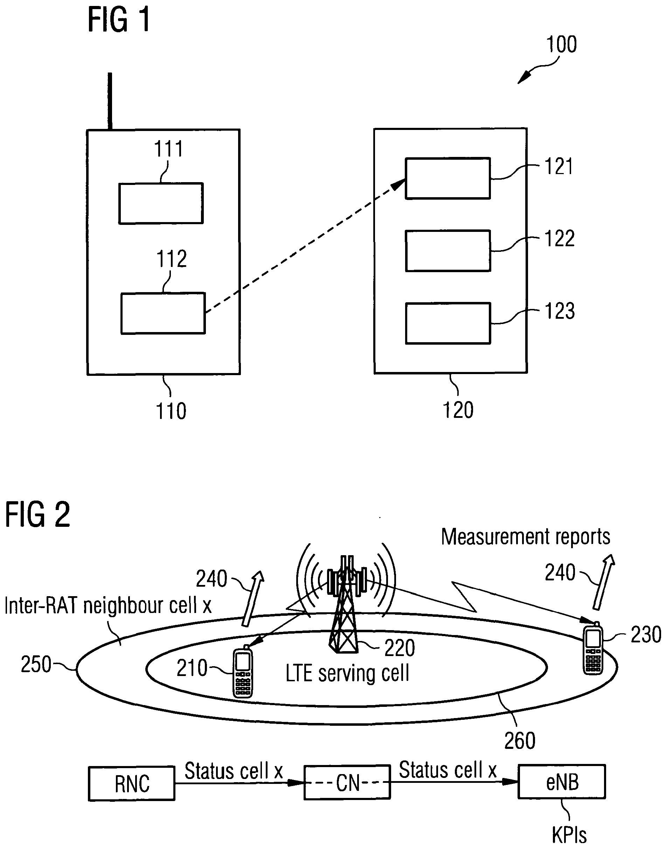

Fig. 1 shows a system according to an embodiment of the invention, which may be used for the present method. The system 100 for self-optimized interworking between a first radio access network of a first type of radio access technology and a second radio access network of a second type of radio access technology comprises a user equipment 110 and a first base station 120.

The user equipment 110 is adapted for self-optimized inter-working between a first radio access network of a first type of radio access technology and a second radio access network of a second type of radio access technology. The first radio access network comprises a first base station 120 and the second radio access network comprises a second base station. The user equipment is served by the first base station and comprises a measuring unit 111 for measuring signals indicative for availability characteristics of the second base station. The user equipment comprises further a transmitting unit 112 for transmitting the signals indicative for the availability characteristics of the second base station to the first base station.

The first base station 120 is adapted for self-optimized interworking between a first radio access network of a first type of radio access technology and a second radio access network of a second type of radio access technology, wherein the first radio access network comprises the first base station. The first base station comprises a receiving unit 121 for receiving the signals from the user equipment. The base station comprises further a generation unit 122 for generating a map of the coverage of the first radio access network and the second radio access network based on the signals indicative for the availability characteristics of the first base station and the second base station, wherein the map comprises the information about the availability characteristics of the first base station and the second base station for interworking. Furthermore, the first base station comprises an interworking unit 123 for self-optimized interworking between the first base station and the second base station based on the map of coverage. Interworking may comprise for example a handover of the user equipment from the first base station to the second base station.

Fig. 2 shows a further embodiment of the invention. In the system of Fig. 2, an automated, self-organizing inter-RAT coverage verification is based on a combination of regular measurement campaigns, KPI evaluations, and exchange of cell status information between the first base station 220 or the second base station, for example an eNB, and the controlling node of the 2G or 3G network, respectively. The first base station is located in an LTE network 260. A further user equipment 230, located in a neighbor cell 250, may also send measurement reports 240.

Based on this data an inter-RAT availability status is derived and in case of severe network or radio changes (for example load, tilt, cell non-availability) the blind HO flag may be disabled and/or verified again. In this way knowledge about the coverage probability of inter-RAT neighbors can be acquired. UE measurements 240 of the other RAT may be combined with status updates received from the other RAT's control node. Configuration of (periodic) measurements of 2G/3G coverage yields (periodic) measurement reports. If a sufficient number of such reports has been evaluated and an appropriate number of these reports show sufficient coverage in terms of level and/or quality the considered 2G/3G neighbor may be considered valid as target cell for directed retry (blind handover flag set). An additional filtering (sliding window or low pass) could be applied to these measurements. These results are used to add a blind HO flag to each inter-RAT neighbor.

To ensure reliability and up-to-date information such measurement campaigns may be repeated in regular intervals. This may be particularly the case for W-CDMA neighbors if coverage is based on quality as there is a strong dependency on the load situation.

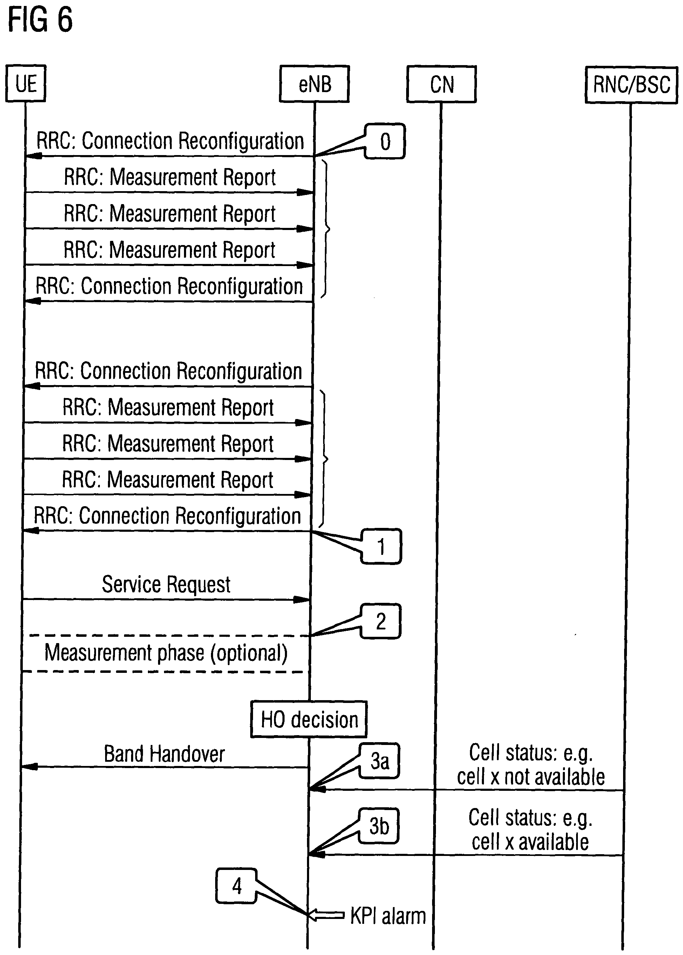

Fig. 6 shows a transactional flow diagram for an evaluation of an inter RAT neighbor availability for blind handover.

In a first step (0), during initialization, the blind handover flag of the target cell is false. Subsequently, a plurality of measurement messages is exchanged between the eNB and the UE. In step (1), sufficient statistical data have been evaluated and show full coverage. The blind HO flag is set true. In step (2), inter RAT handovers can be carried out without any prior measurements.

If the other RAT's controlling node indicates non-availability of the target cell, step (3a), the blind HO flag is set false. If the other RATs controlling node indicates again availability of the target cell, step (3b), the blind HO flag is set true again.

In step (4), if a KPI evaluation yields critical values, for example blind HO success rate (LTE serving - inter RAT target cell) falls below a defined threshold, the blind HO flag is set false. The steps (3a), (3b) and (4) are optional.

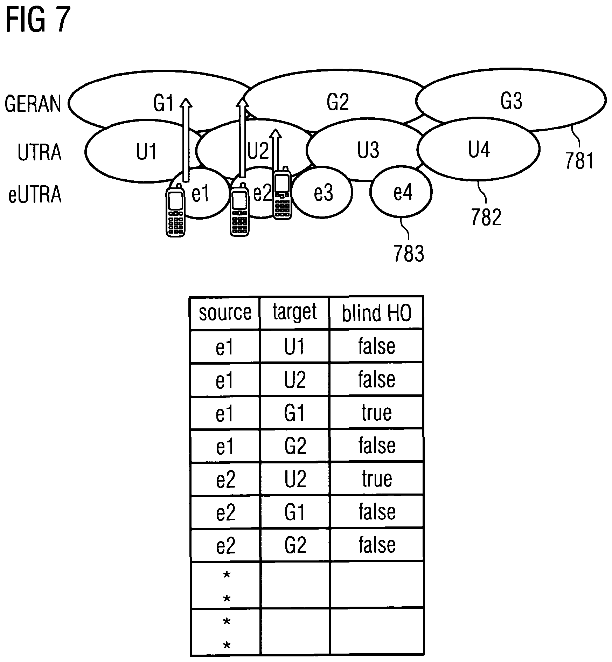

A close observation of the handover performance counters and the appropriate KPIs may complete the picture (e.g. a defined percentage of blind-HO SR requirement for a target cell to stay valid). These measurements may be ordered for UEs served by LTE regardless of the LTE RSRP and/or RSRQ to get an overall statistics on 2G/3G coverage. A list of potential inter-RAT candidate cells for Directed retry / blind HO may be maintained and stored in the eNB. Fig. 7 shows an example of such a list. The list comprises the source cells 783, the possible target cells 782, 781 and the determined blind HO flags.

These measurements can be performed in addition to other e.g. event triggered intra and inter RAT measurements. In order to achieve sufficient reliability a strong limitation of the number of neighbor cells measured in parallel may be ensured (based on a pre-selection by OAM). The present method may also be very helpful for energy savings. If a cell knows that it is fully covered by another cell, it can not only initiate reliable blind handovers, it can also initiate a switch off without the risk of creating a coverage hole.

With the present method and system, regular measurement campaigns of inter RAT neighbors with purpose of coverage verifications may be maintained, visible in UE. Furthermore the (optional) exchange of a status message between different RAT may be maintained. A multi-vendor solution may require that the information has to be exchanged over standardized interfaces, i.e. either extending existing inter-RAT procedures (for instance, RIM) or by introducing new messages.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method for self-optimized handover of a user equipment, between a first radio access network of a first type of radio access technology and a second radio access network of a second type of radio access technology, wherein the first radio access network comprises a first base station (120) and the second radio access network comprises a second base station, the method comprising
• measuring by a user equipment (110), which is served by the first base station (120), signals indicative for availability characteristics of the second base station,
• transmitting the signals indicative for the availability characteristics of the second base station from the user equipment (110) to the first base station (120),
• generating a map of the coverage of the first radio access network and the second radio access network based on the signals indicative for the availability characteristics of the first base station (120) and the second base station, wherein the map comprises the information about the availability characteristics of the first base station (120) and the second base station for interworking and a blind handover flag for each base station, wherein the blind handover flag is indicative for the availability of the first base station and the second base station, and
• self-optimized handover of a user equipment (110) between the first base station (120) and the second base station based on the map of coverage.

2. The method as set forth in any one of the preceding claims, wherein
the availability characteristics comprise information about the cell link quality and/or cell link level of a link between the user equipment and the first base station or the second base station.

3. The method as set forth in any one of the preceding claims, wherein
generating the map of coverage comprises statistically evaluating the signals indicative for the availability characteristics of the base stations.

4. The method as set forth in claim 1, wherein the value of the blind handover flag for the first base station is set true if the first base station is available for blind handover and/or wherein the value of the blind handover flag for the second base station is set true if the second base station is available for blind handover.

5. The method as set forth in claim 4, further comprising changing the value of the blind handover flag by the base stations based on a further information.

6. The method as set forth in claim 5, wherein the further information comprises information obtained by an exchange of cell status information between the first base station and the second base station.

7. A first base station (120) for self-optimized handover of a user equipment, between a first radio access network of a first type of radio access technology and a second radio access network of a second type of radio access technology, wherein the first radio access network comprises the first base station and the second radio access network comprises a second base station, the first base station comprising
• a receiving unit (121) for receiving from a user equipment (110), which is served by the first base station, signals, which are measured by the user equipment and are indicative for availability characteristics of the second base station,
• a generation unit (122) for generating a map of the coverage of the first radio access network and the second radio access network based on the signals indicative for the availability characteristics of the first base station and the second base station, **characterised in that** the map comprises the information about the availability characteristics of the first base station and the second base station for interworking and a blind handover flag for each base station, wherein the blind handover flag is indicative for the availability of the first base station and the second base station, and
• an interworking unit (123) for self-optimized handover of a user equipment, between the first base station and the second base station based on the map of coverage.

8. A system (100) for self-optimized handover of a user equipment, between a first radio access network of a first type of radio access technology and a second radio access network of a second type of radio access technology, the system comprising
a user equipment and the first base station (120) as set forth in claim 7.

## Patentansprüche

1. Verfahren für eine selbstoptimierte Übergabe eines Benutzergeräts zwischen einem ersten Funkzugangsnetz einer ersten Art von Funkzugangstechnologie und einem zweiten Funkzugangsnetz einer zweiten Art von Funkzugangstechnologie, wobei das erste Funkzugangsnetz eine erste Basisstation (120) umfasst und das zweite Funkzugangsnetz eine zweite Basisstation umfasst, wobei das Verfahren Folgendes umfasst:
• Messen durch ein Benutzergerät (110), das durch die erste Basisstation (120) versorgt wird, von Signalen, die Verfügbarkeitscharakteristiken der zweiten Basisstation angeben,
• Senden der Signale, die die Verfügbarkeitscharakteristiken der zweiten Basisstation angeben, vom Benutzergerät (110) zur ersten Basisstation (120),
• Erzeugen einer Karte der Abdeckung des ersten Funkzugangsnetzes und des zweiten Funkzugangsnetzes basierend auf den Signalen, die die Verfügbarkeitscharakteristiken der ersten Basisstation (120) und der zweiten Basisstation angeben, wobei die Karte die Informationen über die Verfügbarkeitscharakteristiken der ersten Basisstation (120) und der zweiten Basisstation zur Zusammenarbeit und ein Blind-Handover-Flag für jede Basisstation umfasst, wobei das Blind-Handover-Flag die Verfügbarkeit der ersten Basisstation und der zweiten Basisstation angibt, und
• selbstoptimierte Übergabe eines Benutzergeräts (110) zwischen der ersten Basisstation (120) und der zweiten Basisstation basierend auf der Abdeckungskarte.

2. Verfahren nach dem vorangegangenen Anspruch, wobei die Verfügbarkeitscharakteristiken Informationen über die Zellenverbindungsqualität und/oder Zellenverbindungsebene einer Verbindung zwischen dem Benutzergerät und der ersten Basisstation oder der zweiten Basisstation umfassen.

3. Verfahren nach einem der vorangegangenen Ansprüche, wobei das Erzeugen der Abdeckungskarte ein statistisches Evaluieren der Signale, die die Verfügbarkeitscharakteristiken der Basisstationen angeben, umfasst.

4. Verfahren nach Anspruch 1, wobei der Wert des Blind-Handover-Flag für die erste Basisstation zu Wahr gesetzt wird, falls die erste Basisstation für ein Blind-Handover verfügbar ist, und/oder wobei der Wert des Blind-Handover-Flag für die zweite Basisstation zu Wahr gesetzt wird, falls die zweite Basisstation für ein Blind-Handover verfügbar ist.

5. Verfahren nach Anspruch 4, das ferner Ändern des Werts des Blind-Handover-Flag durch die Basisstationen basierend auf einer weiteren Information umfasst.

6. Verfahren nach Anspruch 5, wobei die weitere Information Informationen umfasst, die durch einen Austausch von Zellenstatusinformationen zwischen der ersten Basisstation und der zweiten Basisstation erhalten werden.

7. Erste Basisstation (120) für eine selbstoptimierte Übergabe eines Benutzergeräts zwischen einem ersten Funkzugangsnetz einer ersten Art von Funkzugangstechnologie und einem zweiten Funkzugangsnetz einer zweiten Art von Funkzugangstechnologie, wobei das erste Funkzugangsnetz die erste Basisstation umfasst und das zweite Funkzugangsnetz eine zweite Basisstation umfasst, wobei die erste Basisstation Folgendes umfasst:
• eine Empfangseinheit (121) zum Empfangen von einem Benutzergerät (110), das durch die erste Basisstation versorgt wird, von Signalen, die durch das Benutzergerät gemessen werden und Verfügbarkeitscharakteristiken der zweiten Basisstation angeben,
• eine Erzeugungseinheit (122) zum Erzeugen einer Karte der Abdeckung des ersten Funkzugangsnetzes und des zweiten Funkzugangsnetzes basierend auf den Signalen, die die Verfügbarkeitscharakteristiken der ersten Basisstation und der zweiten Basisstation angeben, **dadurch gekennzeichnet, dass** die Karte die Informationen über die Verfügbarkeitscharakteristiken der ersten Basisstation und der zweiten Basisstation zur Zusammenarbeit und ein Blind-Handover-Flag für jede Basisstation umfasst, wobei das Blind-Handover-Flag die Verfügbarkeit der ersten Basisstation und der zweiten Basisstation angibt, und
• eine Zusammenarbeitseinheit (123) für eine selbstoptimierte Übergabe eines Benutzergeräts zwischen der ersten Basisstation und der zweiten Basisstation basierend auf der Abdeckungskarte.

8. System (100) für eine selbstoptimierte Übergabe eines Benutzergeräts zwischen einem ersten Funkzugangsnetz einer ersten Art von Funkzugangstechnologie und einem zweiten Funkzugangsnetz einer zweiten Art von Funkzugangstechnologie, wobei das System Folgendes umfasst:
ein Benutzergerät und die erste Basisstation (120) nach Anspruch 7.

## Revendications

1. Un procédé de transfert auto-optimisé d'un équipement d'utilisateur entre un premier réseau d'accès radio d'un premier type de technologie d'accès radio et un deuxième réseau d'accès radio d'un deuxième type de technologie d'accès radio, le premier réseau d'accès radio comprenant une première station de base (120) et le deuxième réseau d'accès radio comprenant une deuxième station de base, le procédé comprenant
• la mesure par un équipement d'utilisateur (110), qui est desservi par la première station de base (120), de signaux indicatifs de caractéristiques de disponibilité de la deuxième station de base,
• la transmission des signaux indicatifs des caractéristiques de disponibilité de la deuxième station de base de l'équipement d'utilisateur (110) à la première station de base (120),
• la génération d'une carte de la couverture du premier réseau d'accès radio et du deuxième réseau d'accès radio en fonction des signaux indicatifs des caractéristiques de disponibilité de la première station de base (120) et de la deuxième station de base, la carte comprenant les informations relatives aux caractéristiques de disponibilité de la première station de base (120) et de la deuxième station de base destinées à un interfonctionnement et une balise de transfert aveugle pour chaque station de base, la balise de transfert aveugle étant indicative de la disponibilité de la première station de base et de la deuxième station de base, et
• le transfert auto-optimisé d'un équipement d'utilisateur (110) entre la première station de base (120) et la deuxième station de base en fonction de la carte de couverture.

2. Le procédé selon l'une quelconque des revendications précédentes, dans lequel
les caractéristiques de disponibilité comprennent des informations relatives à la qualité de liaison cellulaire et/ou au niveau de liaison cellulaire d'une liaison entre l'équipement d'utilisateur et la première station de base ou la deuxième station de base.

3. Le procédé selon l'une quelconque des revendications précédentes, dans lequel
la génération de la carte de couverture comprend l'évaluation statistique des signaux indicatifs des caractéristiques de disponibilité des stations de base.

4. Le procédé selon la revendication 1, dans lequel la valeur de la balise de transfert aveugle pour la première station de base est réglée sur vrai si la première station de base est disponible pour un transfert aveugle et/ou dans lequel la valeur de la balise de transfert aveugle pour la deuxième station de base est réglée sur vrai si la deuxième station de base est disponible pour un transfert aveugle.

5. Le procédé selon la revendication 4, comprenant en outre la modification de la valeur de la balise de transfert aveugle par les stations de base en fonction d'informations complémentaires.

6. Le procédé selon la revendication 5, dans lequel les informations complémentaires comprennent des informations obtenues par un échange d'informations d'état de cellule entre la première station de base et la deuxième station de base.

7. Une première station de base (120) destinée à un transfert auto-optimisé d'un équipement d'utilisateur entre un premier réseau d'accès radio d'un premier type de technologie d'accès radio et un deuxième réseau d'accès radio d'un deuxième type de technologie d'accès radio, le premier réseau d'accès radio comprenant la première station de base et le deuxième réseau d'accès radio comprenant une deuxième station de base, la première station de base comprenant
• une unité de réception (121) destinée à la réception à partir d'un équipement d'utilisateur (110), qui est desservi par la première station de base, de signaux qui sont mesurés par l'équipement d'utilisateur et sont indicatifs de caractéristiques de disponibilité de la deuxième station de base,
• une unité de génération (122) destinée à la génération d'une carte de la couverture du premier réseau d'accès radio et du deuxième réseau d'accès radio en fonction des signaux indicatifs des caractéristiques de disponibilité de la première station de base et de la deuxième station de base, **caractérisé en ce que** la carte comprend les informations relatives aux caractéristiques de disponibilité de la première station de base et de la deuxième station de base destinées à un interfonctionnement et une balise de transfert aveugle pour chaque station de base, la balise de transfert aveugle étant indicative de la disponibilité de la première station de base et de la deuxième station de base, et
• une unité d'interfonctionnement (123) destinée à un transfert auto-optimisé d'un équipement d'utilisateur entre la première station de base et la deuxième station de base en fonction de la carte de couverture.

8. Un système (100) de transfert auto-optimisé d'un équipement d'utilisateur entre un premier réseau d'accès radio d'un premier type de technologie d'accès radio et un deuxième réseau d'accès radio d'un deuxième type de technologie d'accès radio, le système comprenant
un équipement d'utilisateur et la première station de base (120) selon la revendication 7.
